Europäisches Patentamt

European Patent Office

Office européen des brevets

(19)

(11) Veröffentlichungsnummer: **0 073 479**
**A1**

(12) # EUROPÄISCHE PATENTANMELDUNG

(21) Anmeldenummer: **82107844.1**

(22) Anmeldetag: **26.08.82**

(51) Int. Cl.³: **C 08 G 65/28, C 10 G 33/04**

(30) Priorität: **01.09.81 DE 3134549**

(43) Veröffentlichungstag der Anmeldung: **09.03.83**
**Patentblatt 83/10**

(84) Benannte Vertragsstaaten: **DE GB IT NL**

(71) Anmelder: **HOECHST AKTIENGESELLSCHAFT,**
**Postfach 80 03 20, D-6230 Frankfurt/Main 80 (DE)**

(72) Erfinder: **Diery, Helmut, Dr., Theresenstrasse 45,**
**D-6233 Kelkheim (Taunus) (DE)**
Erfinder: **Hille, Martin, Dr., In den Eichen 46,**
**D-6237 Liederbach (DE)**

(54) **Alkylenoxydpolymerisate, Verfahren zu deren Herstellung und deren Verwendung.**

(57)    Alkylenoxydpolymerisate mit einer Molmasse von 1.500 bis 35.000 erhalten durch Umsetzung eines Diols mit $C_8$–$C_{22}$-Alkenoxiden und $C_2$–$C_4$-Alkenoxiden, wobei der Gesamtanteil des $C_8$–$C_{22}$-Alkenoxids in dem Polymeren 20 bis 80 Gew.-% beträgt, Verfahren zu deren Herstellung und deren Verwendung als Emulsionsspalter von Rohölen.

EP 0 073 479 A1

Alkylenoxydpolymerisate, Verfahren zu deren Herstellung
und deren Verwendung

Bei der Förderung von Rohöl fällt der größte Teil als
eine Wasser-in-Öl-Emulsion an. Nur in der Anfangsphase
wird in einem Ölfeld praktisch reines Rohöl produziert.
Nach einer bestimmten Zeit steigt dann der Wassergehalt
im Rohöl an, vornehmlich beginnend in den am Ölfeldrand
gelegenen Sonden. Das Wasser muß vor dem Transport abgetrennt bzw. unter eine akzeptable Konzentration abgesenkt werden. Dies erfolgt allgemein durch den Zusatz
geringer Mengen an Tensiden, genannt Demulgatoren oder
Emulsionsspalter, wobei in den meisten Fällen das Rohöl
außerdem erwärmt wird. Gute Demulgatoren senken den
Wassergehalt im Rohöl, den Ölgehalt im abgetrennten
Wasser und den Salz- sowie Aschegehalt im Rohöl bei
möglichst geringen Anwendungskonzentrationen und niedrigen Temperaturen sowie kurzer Einwirkzeit auf die
geforderten Werte herab. Die Rohöle sind weltweit sehr
verschieden und deshalb sind zur Erreichung optimaler
Demulgierergebnisse viele Arten von Emulsionsspaltern
im Einsatz. Bei den anfallenden und zu verarbeitenden
großen Mengen an Rohölemulsionen besteht daher ein
großes Interesse an verbesserten Demulgatoren, denn
schon eine geringe Absenkung der Aufbereitungstemperatur, des Salz- und Wassergehaltes im Rohöl oder des
Ölgehaltes im Wasser, bietet signifikante wirtschaftliche Vorteile.

Stark verbreitet ist Demulgierung der Rohöle mit Hilfe
von Umsetzungsprodukten von Alkylenoxyden mit Alkylphenolformaldehydharzen. Produkte dieses Typs sind
beispielsweise in den US-Patentschriften 2 499 368,
2 499 370, 2 524 889, 2 560 333 und 2 574 543 beschrieben. Die nächst größere Gruppe von Demulgatoren sind

0073479

Block- und Mischpolymerisate aus Propylen- und Ethylenoxid z.B. gemäß der französischen Patentschrift 1 069 615 und der deutschen Auslegeschrift Nr. 1 018 179. Man erhält weiterhin effektive Demulgatoren durch die Vernetzung der Block- und Mischpolymerisate aus Propylen- und Ethylenoxid untereinander und mit oxalkylierten Alkylpenolformaldehydharzen. Als Vernetzungsmittel dienen dabei Verbindungen wie Phosphorchloride, Diisocyanate, Dicarbonsäuren und Phenolformaldehydharzkörper.

Es wurde nun gefunden, daß eine wirksame Demulgierung von Rohölen mit verbesserter Wasser- und Salzabscheidung durch Alkylenoxidpolymerisate mit einpolymerisierten $C_8$-$C_{22}$-Alkenoxiden erzielt werden kann.

Gegenstand der Erfindung sind somit Alkylenoxidpolymerisate mit einer Molmasse von 1.500 bis 35.000, vorzugsweise 2.000 bis 15.000, erhalten durch Umsetzung eines Diols mit $C_8$-$C_{22}$-Alkenoxiden und $C_2$-$C_4$-Alkenoxiden, wobei der Gesamtanteil des $C_8$-$C_{22}$-Alkenoxids in dem Polymeren 3 bis 80, vorzugsweise 10 bis 60 Gew.-% beträgt.

Als Diole für die erfindungsgemäßen Polymeren kommen folgende Produkte in Betracht:

a) Aliphatische Diole z.B. Ethylenglykol, 1,2-Propylenglykol, Butandiol-1,4, Dodecandiol- 1,12, Diethylenglykol, Triethylenglykol, Dipropylenglykol, Polyethylenglykole mit relativen Molmassen bis ca. 20.000, Polypropylenglykole mit relativen Molmassen bis ca. 4.000, Polybutylenglykole mit relativen Molmassen bis ca. 4.000,

b) Ethylenoxid-Propylenoxid-Blockpolymerisate, die durch Oxethylierung eines Polypropylenoxids mit einer Molmasse von mindestens 600 hergestellt werden, wobei man

- 3 -

0073479

vorzugsweise von einem Polypropylenoxid mit einer Molmasse von 600 bis 3.500 ausgeht. Das Propylenoxid kann auch teilweise durch Butylenoxid ersetzt werden. Der Anteil der Polyethylenoxidgruppen am Gesamtmolekül des Blockpolymers wird so gewählt, daß er mindestens 5 %, bevorzugt 10 - 80 % ausmacht,

c) Ethylenoxid-Butylenoxid-Blockpolymerisate, die durch Oxethylierung eines Polybutylenoxids mit einer Molmasse von mindestens 600 hergestellt werden, wobei man vorzugsweise von einem Polybutylenoxid mit einer Molmasse von 600 - 3.000 ausgeht.
Das Butylenoxid kann auch teilweise durch Propylenoxid ersetzt werden. Der Anteil der Polyethylenoxidgruppen am Gesamtmolekül des Blockpolymers wird so gewählt, daß er mindestens 10 %, bevorzugt 10 - 80 % beträgt.

Von den $C_8$-$C_{22}$-Alkenoxiden sind die $C_8$-$C_{22}$-1,2-Alkenoxide bevorzugt wie zum Beispiel 1,2-Octenoxid, 1,2-Dodecenoxid, 1,2-Hexadecenoxid, 1,2-Eicosenoxid. Als $C_2$-$C_4$-Alkenoxide kommen vorzugsweise in Frage Ethylenoxid allein, Ethylenoxid zusammen mit Propylenoxid, Propylenoxid allein oder Ethylenoxid zusammen mit Butylenoxid.

Die erfindungsgemäßen Polymeren werden hergestellt, indem man 1 Mol eines Diols mit einer Mischung aus $C_8$-$C_{22}$-Alkylenoxid und $C_2$-$C_4$-Alkylenoxid oxalkyliert. Die Reaktion erfolgt drucklos oder bevorzugt unter Druck in einem Druckgefäß bei Temperaturen von 120 - 190°C, bevorzugt von 140 - 170°C. Als Katalysatoren können die üblicherweise für Oxalkylierungen verwendeten sauren oder alkalischen Katalysatoren genommen werden. Bevorzugt ist die alkalische Katalyse unter Verwendung von z.B. Ätznatron, Ätzalkali, Natrium-methylat oder auch eines basischen Ionenaustauschers.

Die Menge an $C_2$-$C_{22}$-Alkylenoxid bei der Oxalkylierung des Diols wird so gewählt, daß der Anteil dieser Substanzgruppe im fertigen Polymeren 3 bis 80, vorzugsweise 10 bis 60 Gew.-% beträgt. Die Menge und die Art des $C_2$-$C_4$-Alkylenoxids, das zusammen mit dem $C_8$-$C_{22}$-Alkylenoxid bei der Oxalkylierung eingesetzt wird, hängt ab von der Molmasse des Ausgangs-Diols, von der beabsichtigten Molmasse des fertigen Polymers und schließlich von der beabsichtigten Eigenschaft des Polymers.

Geht man von einem niedermolekularen Diol aus, zum Beispiel von Ethylenglykol oder Butandiol, benötigte man naturgemäß eine größere Menge des $C_2$-$C_4$-Alkylenoxids, um eine bestimmte Molmasse zu erhalten, als wenn man bereits von einem höhermolekularen Polyethylenglykol oder Ethylenoxid-Propylenoxid-Polymerisat ausgeht. Es versteht sich auch von selbst, daß die Menge an $C_2$-$C_4$-Alkenoxid umso größer sein muß, je höher die Molmasse des fertigen Polymers ist, wenn man jeweils von dem selben Diol ausgeht. Als $C_2$-$C_4$-Alkenoxid kommt zunächst reines Ethylenoxid in Frage. Man kann aber auch Mischungen von Ethylenoxid mit Propylenoxid oder mit Butylenoxid einsetzen. Das Mischungsverhältnis hierbei zwischen dem Ethylenoxid und den anderen Alkenoxiden kann in weiten Grenzen schwanken. Es richtet sich nach dem gewünschten Charakter des Endprodukts, d.h., ob das Endprodukt ausgeprägte hydrophile Eigenschaften aufweisen soll, weniger hydrophil oder mehr lipophil sein soll. Der hydrophile/lipophile Charakter des Polymermoleküls wird außerdem noch durch die Länge der Alkylkette in dem $C_8$-$C_{22}$-Alkenoxid beeinflußt. Durch Variation von Art und Menge der verschiedenen Arten der Alkenoxide kann der Fachmann den gewünschten Charakter des Polymers erreichen. Dadurch wird eine Anpassung des Polymeren an die Eigenschaften und Erfordernisse der unterschiedlichen Rohölemulsionen ermöglicht, so daß für die jeweilige Rohölemulsion eine optimale Wasser- und Salzabscheidung herausgearbeitet werden kann.

0073479

Arbeitet man, wie oben beschrieben, mit einer Mischung aus $C_8$-$C_{22}$-Alkenoxid und $C_2$-$C_4$-Alkenoxid, so erhält man naturgemäß Polymere, die die einzelnen Monomere in statischer Verteilung enthalten. Es ist jedoch im Rahmen der vorliegenden Erfindung ebenfalls möglich, Blockpolymerisate herzustellen und als Emulsionsspalter einzusetzen. Diese Blockpolymeren werden erhalten, indem man bei der Oxalkylierung des Diols mit dem $C_8$-$C_{22}$-Alkenoxid nur einen Teil der Gesamtmenge an $C_2$-$C_4$-Alkenoxid, z.B. Ethylenoxid zumischt. Die Restmenge wird dann in einer separaten Oxalkylierungsreaktion addiert. Bei Verwendung von Gemischen verschiedener $C_2$-$C_4$-Alkenoxide kann man auch so vorgehen, daß man das $C_8$-$C_{22}$-Alkenoxid beispielsweise im Gemisch mit Propylenoxid addiert und das dabei entstandene Polymerisat dann in einer weiteren Reaktion mit Ethylenoxid umsetzt. Durch diese Art der Reaktionsführung kann man durch Variation der Menge des zuletzt addierten Ethylenoxids leicht einen mehr oder weniger hydrophilen Charakter des Polymeren beeinflussen. Darüber hinaus ist es ebenso möglich, nicht nur das $C_2$-$C_4$-Alkenoxid, sondern auch das $C_8$-$C_{22}$-Alkenoxid in zwei oder mehr Portionen aufzuteilen und schrittweise an das Diol zu addieren. Die so erhaltenen Polymeren eignen sich sehr gut zum Spalten von Emulsionen aus Wasser und Erdöl. Man setzt diese Produkte den Rohölemulsionen in Konzentrationen von 2 bis 400, vorzugsweise 5 bis 50 ppm zu entweder in unverdünnter Form oder als Lösungen, die im Verhältnis 1 : 200 mit einem organischen Lösungsmittel verdünnt werden.

Die folgenden Beispiele sollen die Erfindung erläutern, wobei "ti" in allen Fällen "Innentemperatur" bedeutet. Vor der Oxalkylierung wird das Reaktionsgefäß jeweils mit Stickstoff gespült.

Beispiel 1

a) In einem 2 Liter-VA-Stahlgefäß mit Rührer, Innenthermometer, Bodenventil und Zulaufleitung mit Schauglas, werden 280,5 g eines Ethylenoxid/Propylenoxid-Blockpolymerisats mit einem Polypropylenoxid-Block vom Molekulargewicht ca. 1.800 und 40 % Polyethylenoxid im Gesamtmolekül (mittlere Molmasse 2.805 aus der OH-Zahl berechnet) vorgelegt. Als Katalysator werden 4,7 g Natrium-methylat (30 %ig in Methanol) zugegeben. Beim Aufheizen wird das Methanol am Vakuum abgezogen. Bei $t_i$ = 160 - 170°C wird eine Mischung von 88 g Ethylenoxid (2 Mol) und 46 g 1,2-Dodecenoxid (Mol 230 = 0,2 Mol), die sich in einem 2 Liter-VA Gefäß befinden, unter Stickstoff-Druck innerhalb von 15 Minuten in das Reaktionsgefäß gedrückt. Die exotherme Reaktion läuft bei einem Druck von 3 - 4 bar ab. Nachrührzeit 1 Stunde bei $t_i$ = 100°C. Das flüssige Reaktionsprodukt ist wasserlöslich. Trübungspunkt 49°C (in Wasser nach DIN 53917).

b) Wird wie in Beispiel 1a die Oxalkylierung mit einer Mischung von 88 g Ethylenoxid (2 Mol) und 184 g 1,2-Dodecenoxid (0,8 Mol) durchgeführt, so erfolgt innerhalb 30 Minuten bei 1 - 3 bar und $t_i$ = 160 - 170°C bei exothermer Reaktion eine rasche Aufnahme des Oxalkylierungsgemisches. Das goldgelbe Reaktionsprodukt ist in Wasser schwach trüb.

Beispiel 2

a) In der Apparatur wie in Beispiel 1 werden 280,5 g des Ethylenoxid/Propylenoxid-Blockpolymerisates wie in Beispiel 1 beschrieben vorgelegt. Nach Zugabe von 4,7 g Natrium-methylat-Lösung (30 %ig in Methanol) und Entfernung des Methanols wird bei $t_i$ = 160 - 180°C und 3 - 4 bar die Oxalkylierung durch Aufdrücken einer Mischung von 98 g Ethylenoxid und 55,4 g $C_{16}/C_{18}$-1,2-Alkylenoxid durchgeführt. Das Reaktionsprodukt ist hochviskos und wasserlöslich, und es kann gegebenenfalls mit Eisessig neutralisiert werden.
Trübungspunkt 40°C (in Wasser nach DIN 53917) bzw.
60°C (in Butyldiglykol nach DIN 53917).

b) Wird die Oxalkylierung wie in Beispiel 2a mit einer
Mischung von 94 g Ethylenoxid und 110,8 g $C_{16}/C_{18}$-
1,2-Alkylenoxid durchgeführt, so erhält man ein flüssiges, in Wasser trüb lösliches Reaktionsprodukt.

Beispiel 3

a) In der Oxalkylierungsapparatur wie in Beispiel 1
werden 850 g Propylenglykol mit der Molmasse 1839 und
14 g Natrium-methylat-Lösung (30 %ig in Methanol) vorgelegt. Das Methanol wird beim Aufheizen des Reaktionsgefäßes abgezogen. Bei ti = 160 - 170°C wird mit
einer Mischung von 17o g 1,2-Octadecenoxid (Mol 297
ber. aus Epoxidzahl 123) und 736 g Ethylenoxid bei
3 - 4 bar innerhalb von 1 Stunde oxalkyliert. Es wird
1 Stunde bei 120°C nachgerührt. Das wasserlösliche,
pastöse Reaktionsprodukt hat einen Trübungspunkt von
36°C (in Wasser nach DIN 53917) und von 58°C
(in Butyldiglykol nach DIN 53917).

b) Werden unter den obigen Bedingungen 250 g Polypropylenglykol mit einer Mischung von 100 g 1,2-Octadecenoxid
und 160 g Ethylenoxid oxalkyliert, so erhält man ein
flüssiges Reaktionsprodukt mit dem Trübungspunkt 42°C
(in Butyldiglykol nach DIN 53917).

c) Werden unter den obigen Bedingungen 250 g Polypropylenglykol mit einer Mischung von 150 g 1,2-Octadecenoxid
und 100 g Ethylenoxid oxalkyliert, so erhält man ein
flüssiges Reaktionsprodukt. Dieses Produkt ist im Gegensatz zum Beispiel 3a und 3b löslich in Dieselöl.

Beispiel 4

a) In der Oxalkylierungsapparatur wie in Beispiel 1 werden 500 g Polypropylenglykol mit der Molmasse 1.839 und 8,3 g Natrium-methylat-Lösung (30 %ig in Methanol) vorgelegt. Nach Abziehen des Methanols am Vakuum wird mit einer Mischung von 100 g 1,2-Dodecenoxid und 419 g Ethylenoxid oxalkyliert. ti = 160 - 170°C/3 - 4 bar/Reaktionszeit 50 Minuten. Nachrührzeit 1 Stunde bei ti = 160°C. Das wasserlösliche Reaktionsprodukt zeigt einen Trübungspunkt von 32°C (in Wasser nach DIN 53917) bzw. 54°C (in Butyldiglykol nach DIN 53917).

b) Werden unter den Bedingungen des Beispiels 4a 500 g Polypropylenglykol mit einer Mischung aus 200 g 1,2-Dodecenoxid und 333 g Ethylenoxid oxalkyliert, so wird ein flüssiges Reaktionsprodukt mit dem Trübungspunkt von 20°C (in Wasser nach DIN 53917) bzw. von 34°C (in Butyldoglykol nach DIN 53917) erhalten.

Beispiel 5

a) Im Reaktionsgefäß von Beispiel 1 werden 250 g Polypropylenglykol mit der Molmasse 3.500 und 4,1 g Natrium-methylat (30 %ig in Methanol) vorgelegt. Nach Abziehen des Methanols während des Aufheizens wird eine Mischung von 50 g 1,2-Octadecenoxid (Epoxidzahl 123; Gebrauchsmol 297) und 211 g Ethylenoxid innerhalb von ca. 20 Minuten bei ti = 160 - 170°C und 3 - 4 bar zugegeben. Nachrühren 1 Stunde bei ti = 120°C. Nach Abneutralisieren mit wasserfreier Essigsäure aufpH = 6,0 (potentiomerisch) zeigt das Produkt einen Trübungspunkt von 62°C (in Butyldiglykol nach DIN 53917).

b) Wird wie in Beispiel 5a verfahren, aber die Mischoxalkylierung mit einer Mischung aus 100 g 1,2-Octadecenoxid und 150 g Ethylenoxid durchgeführt, so erhält man nach Neutralisation auf pH = 7,4 ein flüssiges, trübes Reaktionsprodukt mit einem Trü-bungspunkt von 43°C (in Butyldiglykol nach DIN 53917).

Beispiel 6

a) In der Apparatur von Beispiel 1 werden 250 g Polypropylenglykol mit der Molmasse 3.500 und 4,1 g Natrium-methylat (30 %ig in Methanol) vorgelegt. Nach Abziehen des Methanols am Vakuum während des Aufheizens wird eine Mischung von 50 g 1,2-Dodecenoxid (Epoxidzahl 182, Gebrauchsmol 200, 5) und 180 g Ethylenoxid innerhalb von ca. 20 Minuten bei ti = 160 - 170°C und 3 - 4 bar zugegeben. Das hellbraune, pastenartige, wasserlösliche Reaktionsprodukt wird mit wasserfreier Essigsäure auf pH = 6,9 eingestellt und zeigt einen Trübungspunkt von 50°C (in Butyldiglykol nach DIN 53917).

b) Wird wie in Beispiel 6a ein Oxalkylierungsgemisch aus 100 g 1,2-Dodecenoxid und 155 g Ethylenoxid eingesetzt, so erhält man nach Neutralisation auf pH 6,2 ein trüb-flüssiges Umsetzungsprodukt mit einem Trü-bungspunkt von 27°C (in Butyldiglykol nach DIN 53917).

c) Mit einer Mischung aus 200 g 1,2-Dodecenoxid und 68 g Ethylenoxid wird wie in Beispiel 6a verfahren. Man erhält ein bernsteinfarbiges, blankes, flüssiges Reaktionsprodukt, das wasserunlöslich ist und als Ausgangsprodukt für die Oxethylierung nach dem folgenden Beispiel verwendet wird.

### Beispiel 7

a) 179 g des Reaktionsproduktes aus Beispiel 6c werden in der Apparatur Beispiel 1 in Gegenwart von Natrium-methylat mit 30 g Ethylenoxid wie üblich umgesetzt. Die erhaltene dünne Paste zeigt einen Trübungspunkt $< 10^{\circ}C$ (in Wasser nnach DIN 53917) bzw. $< 2^{\circ}C$ (in Butyldiglykol nach DIN 53917).

b) 161 g des Reaktionsproduktes aus Beispiel 6c werden in Gegenwart von Natrium-methylat mit 136 g Ethylenoxid unter Druck umgesetzt. Das neutralisierte wachsartige Reaktionsprodukt ist wasserlöslich und zeigt einen Trübungspunkt von $72^{\circ}C$ (in Butyldiglykol nach DIN 53917).

### Beispiel 8

a) In der Oxalkylierungsapparatur von Beispiel 1 werden 90 g Butandiol-1,4 (1 Mol) mit 6 g Natrium-methylat (30 %ig in Methanol) vorgelegt. Nach Abziehen des Methanols am Vakuum wird bei ti = 160 - 170$^{\circ}$C und einem Druck von 4 - 5 bar eine Mischung von 765 g Propylenoxid (13,5 Mol) und 976,5 g 1,2-Tetradecenoxid (4,5 Mol) innerhalb von 3 1/2 Stunden zugedrückt. Nach 3 1/2 Stunden Nachrührzeit bei ti = 160$^{\circ}$C wird ein helles flüssiges Produkt erhalten, das mit wasserfreier Essigsäure neutralisiert werden kann. Dieser Polypropylenoxid/Polytetradecenoxid-Block mit einem berechneten Durchschnittsmolekulargewicht von ca. 1.820 kann für weitere Oxalkylierungen eingesetzt werden. Analog diesem Beispiel lassen sich anstelle von Butandiol-1,4 als Kernmolekül für den Aufbau der Oxalkylierungsketten auch andere Diole einsetzen, z.B. Ethylenglykol, 1,2-Propylenglykol, Diethylenglykol, Tetraethylenglykol oder auch höhere Polyethylenglykole.

b) Das nach Beispiel 8 erhaltene Reaktionsprodukt wird weiter mit Ethylenoxid umgesetzt. Zu diesem Zweck werden in der beschriebenen Druckapparatur 182 g des Reaktionsproduktes vorgelegt und in Gegenwart von Natrium-methylat mit 126 g Ethylenoxid bei ti = 150 - 160°C und 4 - 5 bar zur Reaktion gebracht. Der Zulauf erfolgt innerhalb von 10 Minuten. Nachrührzeit 30 Minuten bei ti = 150°C. Das so erhaltene Oxalkylat enthält 40,6 % Polyethylenoxid im Molekül und zeigt einen Trübungspunkt von 62°C (in Butyldiglykol nach DIN 53917).

c) Werden 200 g des Reaktionsproduktes aus Beispiel 8 vorgelegt und mit 321 g Ethylenoxid zur Umsetzung gebracht, so wird ein pastöses hellbraunes Produkt mit 61,5 % Polyethylenoxid im Molekül und einem Trübungspunkt von 88°C (in Butyldiglykol nach DIN 53917) erhalten.

Beispiel 9

In der in Beispiel 1 beschriebenen Apparatur werden 182 g der nach Beispiel 8 hergestellten Verbindung mit einer mittleren Molmasse von 1.820 vorgelegt und in Gegenwart von Natrium-methylat mit einer Mischung aus 378 g Propylenoxid und 488 g 1.2-Tetradecenoxid bei 150 - 160°C und 4 - 5 bar weiter oxalkyliert, so daß eine berechnete mittlere Molmasse von ca. 10.500 erhalten wird. Das goldgelbe, flüssige Reaktionsprodukt wird, um es hydrophil zu machen, anschließend mit Ethylenoxid umgesetzt. Dazu werden in der gleichen Apparatur 300 g des obigen Reaktionsproduktes vorgelegt und mit 220 g Ethylenoxid unter den üblichen Bedingungen zur Umsetzung gebracht.

Das pastöse, hellbraune Reaktionsprodukt löst sich in Wasser milchig trüb und zeigt einen Trübungspunkt von 79°C (in Butyldiglykol nach DIN 53917).

Im folgenden wird die demulgierende Wirkung der erfindungsgemäßen Verbindungen an Rohölemulsionen bei den in den Ölfeldern üblichen Bedingungen und Einsatzmengen aufgezeigt.

Die Demulgatoren wurden dabei in 50 %igen methanolischen Lösungen angewendet, die mit Mikrodosiereinrichtungen injiziert werden. Die Abscheidung des emulgierten Wassers erfolgt in konischen, kalibrierten, mit Stopfen verschließbaren Gläsern, und die Menge an Emulsion beträgt jeweils 100 cm$^3$. In den Tabellen werden die in bestimmten Zeiten abgeschiedenen Mengen an Emulsionswasser in % angegeben.

Durch Vorversuche wurde der absolute Wassergehalt der Emulsion jeweils nach Dean-Stark bestimmt. Die Dosiermenge der Demulgatoren, der absolute Wassergehalt der Emulsion, die Separiertemperatur und der Emulsionsursprung sind in den folgenden Tabellen aufgeführt.

TABELLE 1

Demulgiertemperatur : 50°C    Wassergehalt der Emulsion : 16 %
Dosiermenge        : 25 ppm   Ursprung : Mexico  Bateria Naranjos

| Polymer gemäß Beispiel | Minuten: 10 | 20 | 30 | 60 | 90 | 120 |
|---|---|---|---|---|---|---|
| | | | % Wasserseparation | | | |
| 1 a | 15 | 41 | 72 | 88 | 93 | 96 |
| 1 b | 22 | 43 | 60 | 72 | 82 | 87 |
| 2 a | 38 | 65 | 81 | 92 | 100 | 100 |
| 2 b | 75 | 87 | 94 | 99 | 100 | 100 |
| 3 a | 78 | 89 | 96 | 100 | 100 | 100 |
| 3 b | 42 | 61 | 79 | 91 | 96 | 100 |
| 3 c | 22 | 45 | 61 | 73 | 84 | 90 |
| 4 a | 48 | 63 | 78 | 88 | 93 | 96 |
| 4 b | 32 | 48 | 65 | 70 | 82 | 88 |
| 5 a | 45 | 63 | 75 | 93 | 98 | 100 |
| 5 b | 30 | 36 | 38 | 80 | 86 | 90 |
| 6 a | 62 | 83 | 94 | 99 | 100 | 100 |
| 6 b | 48 | 68 | 77 | 89 | 97 | 100 |
| 6 c | 25 | 47 | 61 | 80 | 88 | 91 |
| 7 a | 40 | 55 | 60 | 73 | 86 | 93 |
| 7 b | 57 | 72 | 86 | 95 | 99 | 100 |
| 8 b | 40 | 54 | 67 | 74 | 85 | 93 |
| 8 c | 38 | 42 | 48 | 70 | 83 | 91 |
| 9 | 78 | 87 | 95 | 98 | 100 | 100 |
| ohne Demulgator | 0 | 0 | 0 | 0 | 0 | 0 |

0073479

TABELLE 2

| | | |
|---|---|---|
| Demulgiertemperatur | : | 40°C |
| Wassergehalt der Emulsion | : | 63 % |
| Dosiermenge | : | 45 ppm |
| Ursprung | : | Emsland BRD |

| Beispiel Minuten: | 10 | 20 | 30 | 60 | 120 |
|---|---|---|---|---|---|
| 1 a | 11 | 43 | 85 | 100 | 100 |
| 1 b | 62 | 73 | 81 | 86 | 90 |
| 2 a | 55 | 82 | 98 | 100 | 100 |
| 2 b | 31 | 35 | 40 | 91 | 96 |
| 3 a | 38 | 75 | 92 | 100 | 100 |
| 3 b | 8 | 36 | 65 | 93 | 100 |
| 3 c | 66 | 68 | 71 | 91 | 95 |
| 4 a | 68 | 76 | 79 | 92 | 86 |
| 4 b | 64 | 69 | 86 | 92 | 98 |
| 5 a | 82 | 90 | 96 | 100 | 100 |
| 5 b | 55 | 58 | 60 | 98 | 100 |
| 6 a | 68 | 82 | 93 | 98 | 100 |
| 6 b | 86 | 92 | 99 | 100 | 100 |
| 6 c | 64 | 66 | 68 | 72 | 96 |
| 7 a | 28 | 37 | 45 | 83 | 95 |
| 7 b | 33 | 45 | 69 | 92 | 100 |
| 8 b | 75 | 85 | 93 | 98 | 100 |
| 8 c | 82 | 93 | 98 | 100 | 100 |
| 9 | 52 | 68 | 83 | 96 | 100 |
| ohne Demulgator | 0 | | 0 | 0 | 0 |

Patentansprüche

1. Alkylenoxidpolymerisate mit einer Molmasse von 15.000 bis 35.000, erhalten durch Umsetzung eines Diols mit $C_8$-$C_{22}$-Alkenoxiden und $C_2$-$C_4$-Alkenoxiden, wobei der Gesamtanteil des $C_8$-$C_{22}$-Alkenoxids in den Polymeren 20 bis 80 Gew.-% beträgt.

2. Alylenoxidpolymerisate nach Anspruch 1 mit einer Molmasse von 2.000 bis 15.000.

3. Alkylenoxidpolymerisate nach Anspruch 1 mit einem Gesamtanteil des $C_8$-$C_{22}$-Alkylenoxids in den Polymeren von 35 bis 70 Gew.-%.

4. Verfahren zur Herstellung der Alkylenoxidpolymerisate nach Anspruch 1, dadurch gekennzeichnet, daß man 1 Mol eines Diols mit einer Mischung aus $C_8$-$C_{22}$-Alkylenoxid und $C_2$-$C_4$-Alkylenoxid oxalkyliert.

5. Verfahren zum Demulgieren von Rohölemulsionen zur Wasser- und Salzabscheidung, dadurch gekennzeichnet, daß man der Emulsion ein Alkylenoxidpolymerisat nach Anspruch 1 zusetzt.

# EUROPÄISCHER RECHERCHENBERICHT

**0073479**
Nummer der Anmeldung

EP 82 10 7844

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | C 08 G 65/28 |
| A | US-A-3 748 276 (IRVING R. SCHMOLKA) * Ansprüche * | 1 | C 10 G 33/04 |
| | --- | | |
| A | US-A-3 829 506 (IRVING R. SCHMOLKA et al.) * Ansprüche * | 1 | |
| | --- | | |
| P | US-A-4 312 775 (EDWARD J. PANEK et al.) * Ansprüche * | 1,2 | |
| | --- | | |
| E | EP-A-0 061 822 (BASF) * Ansprüche * | 1,2 | |
| | --- | | RECHERCHIERTE SACHGEBIETE (Int. Cl. 3) |
| E | EP-A-0 064 236 (BASF) * Ansprüche * | 1,2 | |
| | ----- | | C 08 G |
| | | | C 10 G |
| | | | E 21 B |

Der vorliegende Recherchenbericht wurde für alle Patentansprüche erstellt.

| Recherchenort | Abschlußdatum der Recherche | Prüfer |
|---|---|---|
| DEN HAAG | 08-12-1982 | MALHERBE Y.J.M. |